Europäisches Patentamt

European Patent Office

Office européen des brevets

(19)

(11) EP 1 555 744 A2

(12) **EUROPEAN PATENT APPLICATION**

(43) Date of publication:
 20.07.2005 Bulletin 2005/29

(51) Int Cl.⁷: **H02M 5/458**

(21) Application number: 05000502.4

(22) Date of filing: 12.01.2005

(84) Designated Contracting States:
 **AT BE BG CH CY CZ DE DK EE ES FI FR GB GR**
 **HU IE IS IT LI LT LU MC NL PL PT RO SE SI SK TR**
 Designated Extension States:
 **AL BA HR LV MK YU**

(30) Priority: 14.01.2004 JP 2004007226

(71) Applicant: **FANUC LTD**
 **Minamitsuru-gun, Yamanashi 401-0597 (JP)**

(72) Inventors:
 • **Yaeshima, Mamoru**
  **Hadano-shi Kanagawa 257-0013 (JP)**

 • **Hanyu, Shigeki,**
  **Room 7-103, FANUC Manshonharimomi**
  **Minamitsuru-gun Yamanashi 401-0511 (JP)**
 • **Kagami, Hideki**
  **Yamanashi 403-0022 (JP)**
 • **Yamada, Yuuichi,**
  **Room 6-101, FANUC Manshonharimomi**
  **Minamitsuru-gun Yamanashi 401-0511 (JP)**

(74) Representative: **Schmidt, Steffen J., Dipl.-Ing.**
 **Wuesthoff & Wuesthoff,**
 **Patent- und Rechtsanwälte,**
 **Schweigerstrasse 2**
 **81541 München (DE)**

(54) **Power converter and inverter including converter circuit**

(57) In an inverter comprising a converter circuit that converts an alternating current into a direct current and an inverter circuit that inverts the direct current into the alternating current, supply of energy from a voltage smoothing capacitor to a load or recovery of energy from the load is facilitated without the necessity of increasing the capacitance of the voltage smoothing capacitor interposed between the converter circuit and inverter circuit. In the converter circuit, before the supply of energy to the load is started, the voltage on a dc link is raised. Before collection of energy from the load is started, the voltage on the dc link is lowered.

Fig.1

EP 1 555 744 A2

## Description

### BACKGROUND OF THE INVENTION

1. Field of the Invention

The present invention relates to a converter, to an inverter including a converter circuit and, more particularly, to the control of a dc link voltage in the converter and the inventor.

2. Description of the Related Art

Inverters convert an applied direct current (dc) into an alternating current (ac), and are used to, for example, drive an induction motor. The inverter coverts an applied dc voltage into an ac voltage by performing pulse width control, etc.

An inverter having the following configuration is also known: a converter circuit that converts an ac voltage applied from an ac power supply into a dc voltage is connected to an inverter circuit (dc link); and a dc link voltage provided by the converter circuit is used as an input of the inverter circuit.

In the converter or the inverter including the converter circuit, a capacitor is often connected on the dc link between the converter circuit and inverter circuit. The capacitor is known to not only smooth a dc voltage into which an ac voltage is converted but also help supply or recover energy to or from a load.

For example, assuming that a motor is driven using an inverter, when the motor is accelerated, energy stored in a voltage smoothing capacitor connected on a dc link in the inverter is supplied to the motor in order to help supply energy necessary for acceleration of the motor for a short period of time. When the motor is decelerated, energy regenerated by the motor is recovered into a voltage smoothing capacitor connected on the dc link in the inverter. This helps recover energy, which is regenerated during deceleration of the motor, for a short period of time.

Consequently, an amount of energy supplied from a power supply is reduced, and an amount of energy returned to the power supply is reduced. Eventually, energy can be rapidly supplied from or returned to the power supply without the necessity of increasing the capacity of the power supply. Moreover, a loss in energy occurring over a power line can be reduced.

The above operation of the voltage smoothing capacitor incorporated in the inverter is well-known.

In the foregoing converter or inverter, it is conceivable, in order to facilitate smooth supply of energy to a load or smooth recovery of energy regenerated by the load is, for example, to increase the capacitance of the voltage smoothing capacitor.

However, if the capacitance of the voltage smoothing capacitor is increased, the scale of the converter or inverter becomes larger.

### SUMMARY OF THE INVENTION

Accordingly, an object of the present invention is to solve the foregoing problems underlying the related arts and to facilitate supply of energy from a voltage smoothing capacitor to a load or recovery of energy from the load without the necessity of increasing the capacitance of the capacitor.

According to the present invention, a voltage on a dc link is dynamically controlled in order to facilitate supply of energy stored in a capacitor or recovery of excess energy into the capacitor. Thus, the supply of energy from a power supply or recovery of energy into the power supply is effectively minimized.

In a converter using pulse-width modulation (PWM), a control technique used to retain a dc link voltage at a predetermined value is well-known. According to the present invention, a control target value of the dc link voltage is dynamically changed in order to dynamically control the dc link voltage. In, for example, a numerically controlled machine tool, the link voltage can be controlled, in the same manner as control of acceleration or deceleration of a motor, in response to a command programmed in a numerical controller.

The present invention can be implemented in a converter or an inverter including a converter circuit.

The converter uses a PWM to control the voltage on a dc link. Herein, before supply of energy to a load is started, the voltage on a dc link is elevated. Moreover, before recovery of energy from the load is started, the voltage on the dc link is lowered.

As the voltage on the dc link is set to a voltage higher than a normal dc link voltage when energy is supplied to the load, a larger amount of energy is stored in a capacitor, and a large amount of energy can be supplied to the load at a time. Eventually, an amount of power supplied from a power supply is reduced, and a large amount of power can be supplied to the load with the capacity of the power supply held diminished.

As the voltage on the dc link is set to a voltage lower than a normal dc link voltage when energy is recovered from the load, a larger amount of energy can be recovered into the capacity than an amount of energy recovered normally, and a large amount of energy can be recovered from the load at a time. Consequently, a current recovered by the power supply can be reduced and a loss in energy occurring over a power line can be reduced. Moreover, if a regenerated current is supplied to a resistor, the energy consumed by the resistor will be reduced.

Moreover, when the present invention is implemented in an inverter, the foregoing converter is interposed between an inverter circuit and an ac power supply.

A converter or an inverter in accordance with the present invention can be adapted to a case where a motor is used as the load. In order to adapt the converter and inverter to the motor serving as a load, the converter and inverter will have constituent features described below.

When a converter capable of controlling the voltage on a dc link using a PWM is used to drive a motor, the voltage on the dc link is elevated prior to acceleration of the motor, and/or the voltage on the dc link is lowered prior to deceleration of the motor.

When the present invention is implemented in a converter, the converter can control the voltage on a dc link using a PWM and is used to drive a motor. The voltage on the dc link is elevated prior to acceleration of the motor, and lowered prior to deceleration of the motor.

For elevation of the voltage on a dc link, the voltage on the dc link is elevated in response to a dc link voltage elevating command described in a motor control program (for example, a numerical control program). The dc link voltage elevating command is programmed to be issued a predetermined time earlier than a motor acceleration command.

The magnitude of an input current necessary for elevating a dc link voltage can be arbitrarily set in response to a command described in the numerical control program. For example, a voltage difference by which the voltage on the dc link is elevated or a length of the elevation period is determined based on a current permitted by a power supply or a converter, and described in the numerical control program.

For lowering of the voltage on a dc link, the voltage on the dc link is lowered in response to a dc link voltage lowering command described in a motor control program (for example, a numerical control program). The dc link voltage lowering command is programmed to be issued a predetermined time earlier than a motor deceleration command.

The magnitude of an input current necessary for lowering the voltage on the dc link can be arbitrarily set in response to a command described in the numerical control program. For example, a voltage difference by which the voltage on the dc link is lowered or a length of the lowering period is determined based on a current permitted by a power supply or a converter, and described in the numerical control program.

In a converter in accordance with the present invention or an inverter including the converter, the supply of energy from a voltage smoothing capacitor to a load or recovery of energy from the load can be facilitated without the necessity of increasing the capacitance of the capacitor.

An inverter in accordance with the present invention will be described in conjunction with drawings below.

BRIEF DESCRIPTION OF THE DRAWINGS

Fig. 1 is an explanatory diagram schematically showing an inverter in accordance with the present invention;

Fig. 2 shows an example of the configuration of a converter circuit in accordance with the present invention;

Fig. 3 is an explanatory diagram concerning control of a dc link voltage to be extended at the time of accelerating a motor according to the present invention;

Fig. 4 is an explanatory diagram concerning control of a dc link voltage to be extended at the time of decelerating a motor according to the present invention;

Fig. 5 shows the relationship of a dc link voltage to a motor speed; and

Fig. 6A and Fig. 6B are explanatory diagrams concerning the relationship of a voltage variation to a time interval established according to the present invention.

DESCRIPTION OF THE PREFERRED EMBODIMENTS

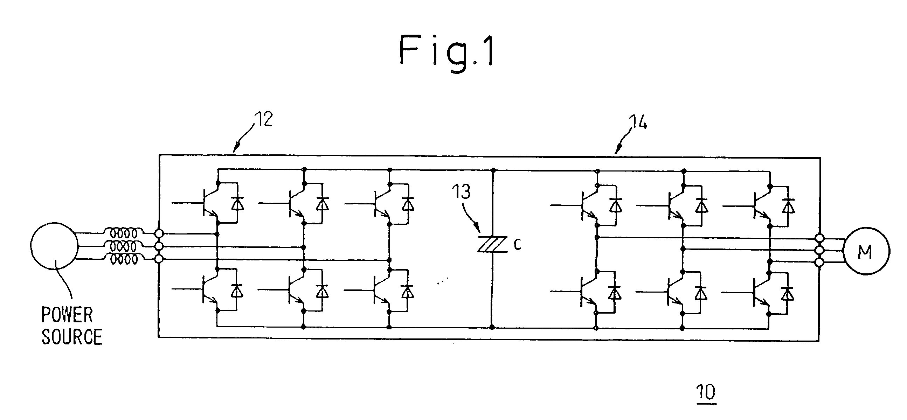

Fig. 1 is an explanatory diagram schematically showing an inverter in accordance with the present invention. An inverter 10 shown in Fig. 1 comprises a converter circuit 12 that converts an ac voltage applied from an ac power supply into a dc voltage, a voltage smoothing capacitor 13, and an inverter circuit 14 that inverts a dc voltage into an ac voltage of a predetermined frequency and applies the ac voltage to a load (a motor M).

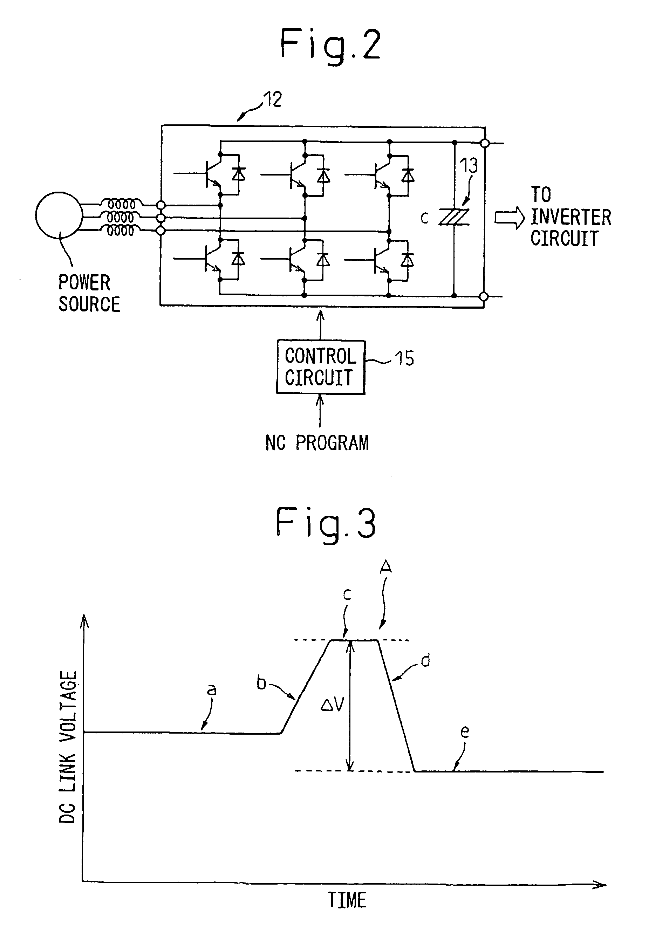

In the inverter 10 of the present invention, the converter circuit 12 controls a dc link voltage. Fig. 2 shows an example of the configuration of the converter circuit. The converter circuit 12 is controlled by PWM to allow a control circuit 15 to switch the on and off states of transistors such as IGBTs. The technology of retaining a dc link voltage at a predetermined value using a PWM is well-known. A control target value of the dc link voltage is dynamically changed in order to dynamically control the dc link voltage. For example, in a numerically controlled machine tool, the link voltage is controlled, in the same manner as acceleration or deceleration of a motor is, in response to a command programmed in a numerical controller.

Next, control of the converter circuit employed in the present invention will be described by taking, as an example, a case where a motor serves as a load.

The voltage smoothing capacitor 13 is disposed on the dc link of the converter circuit to the inverter circuit. Energy is stored in or released from the capacitor. The energy stored in or released from the capacitor depends on a change in the voltage on the dc link and is expressed as follows:

$$\text{Energy in the capacitor} = (V_2{}^2 - V_1{}^2) \, / \, 2C \qquad (1)$$

where $V_1$ denotes an initial voltage on the dc link, and $V_2$ denotes a controlled voltage on the dc link.

The formula (1) demonstrates that an absolute value $|V_2-V_1|$ of a difference between the controlled voltage $V_2$ on the dc link and the initial voltage $V_1$ should be increased in order to store or release a larger amount of energy in or from the capacitor.

The present invention utilizes the fact that the energy stored in or released from the capacitor depends on the absolute value of the difference between the controlled voltage $V_2$ on the dc link and the initial voltage $V_1$. The voltage V on the dc link is dynamically controlled so that a larger amount of energy will be stored in or released from the capacitor than it is when the voltage is not controlled. When energy is supplied from a power supply to a load, energy from the power supply as well as energy stored in the capacitor is supplied to the load. Moreover, when energy is recovered from the load, energy is recovered not only into the power supply but also into the capacitor. This facilitates energy supply and energy recovery. Consequently, supply of energy from the power supply or recovery of energy into the power supply is effectively minimized.

For example, in a numerically controlled machine tool, dynamic control of a dc link voltage is, similarly to control of acceleration or deceleration of a motor, performed in response to a command programmed in a numerical controller.

A description will be made of a case where a motor is accelerated or decelerated. When the motor is accelerated or decelerated, energy is transferred between the power supply and motor via the capacitor on the dc link.

As expressed by the formula (1), the larger the absolute value $|V_2-V_1|$ of the difference between the controlled voltage $V_2$ on the dc link and the initial voltage $V_1$ is, the smaller an amount of energy transferred to or from the power supply is.

To begin with, control of a dc link voltage extended for acceleration of the motor will be described in conjunction with Fig. 3.

For acceleration of the motor, before the motor is accelerated, the largest possible amount of energy is stored in the capacitor on the dc link. Thus, power to be supplied from the power supply is reduced and the capacity of the power supply is diminished.

Referring to Fig. 3, the voltage on the dc link is elevated (b) from the initial voltage (a) on the dc link to the controlled voltage $V_2$ on the dc link (c). With the voltage on the dc link elevated, supply of energy to the motor is started in order to start accelerating the motor (at a motor acceleration start time instant A in the drawing). When the motor is accelerated, the voltage on the dc link falls (d) and eventually reaches a constant voltage (e).

When the dc voltage is elevated before acceleration of the motor is started, energy derived from a potential difference ΔV between the voltage c and voltage e can be supplied from the capacitor to the motor. The potential difference ΔV is larger than it is when the dc voltage is not elevated. Accordingly, a larger amount of energy is stored in the capacitor and a larger amount of energy is supplied to the motor.

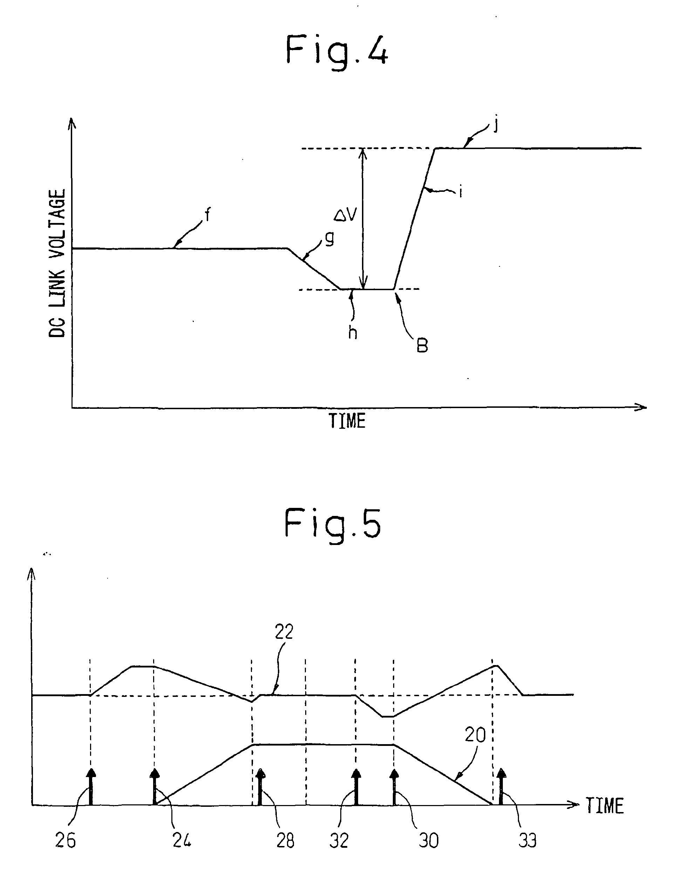

Next, control of a dc link voltage extended for deceleration of the motor will be described in conjunction with Fig. 4.

For deceleration of the motor, the largest possible amount of energy is regenerated by the motor and recovered into the capacitor. Thus, an amount of power to be supplied to the power supply is reduced, and the capacity of the power supply is diminished.

Referring to Fig. 4, the voltage on the dc link is lowered (g) from an initial voltage (f) to a voltage (h) corresponding to the controlled voltage $V_2$ on the dc link. After the voltage on the dc link is lowered, deceleration of the motor is started and recovery of regenerated energy from the motor is started (at a motor deceleration start time instant B in the drawing). As the motor is decelerated, the voltage on the dc link rises (i) owing to recovered energy. Eventually, the dc voltage reaches a voltage (j).

When the dc voltage is lowered before deceleration of the motor is started, energy derived from the potential difference ΔV between the voltage h and voltage j is recovered into the capacitor. The potential difference ΔV is larger than it is when the dc voltage is not lowered. Accordingly, a larger amount of energy is recovered into the capacitor, and a larger amount of energy is recovered from the motor. Consequently, an amount of energy recovered by the power supply or a resistor is decreased. Recovery by the power supply causes a loss in energy over a power line because a current is regenerated. Energy recovered by the resistor is consumed as thermal energy. According to the present invention, the energy loss is decreased by reducing recovery by the power supply or by the resistor.

Fig. 5 shows the relationship between a programmed command and changes in a dc link voltage and a motor speed. Referring to Fig. 5, reference numeral 20 denotes the motor speed, and reference numeral 22 denotes the dc link voltage. A command 26 for elevating the dc link voltage is written in a program before to a motor acceleration command 24. The command for elevating the dc link voltage is released at a step at which the motor is accelerated to a predetermined speed (28).

Moreover, a command 32 for lowering the dc link voltage is written in the program before to a motor deceleration command 30. The command for lowering the dc link voltage is released at a step at which the motor is decelerated to a predetermined speed (for example, a zero speed) (33).

When the dc link voltage is changed, an excess input current may flow during charge or discharge of the dc link because the potential difference between a supply voltage and the dc link voltage increases.

In order to confine the input current to a predetermined current such as a rated current of equipment, a voltage variation such as an elevation voltage difference or a lowering voltage difference and/or a length of the elevation or lowering period is specified as a parameter in a program.

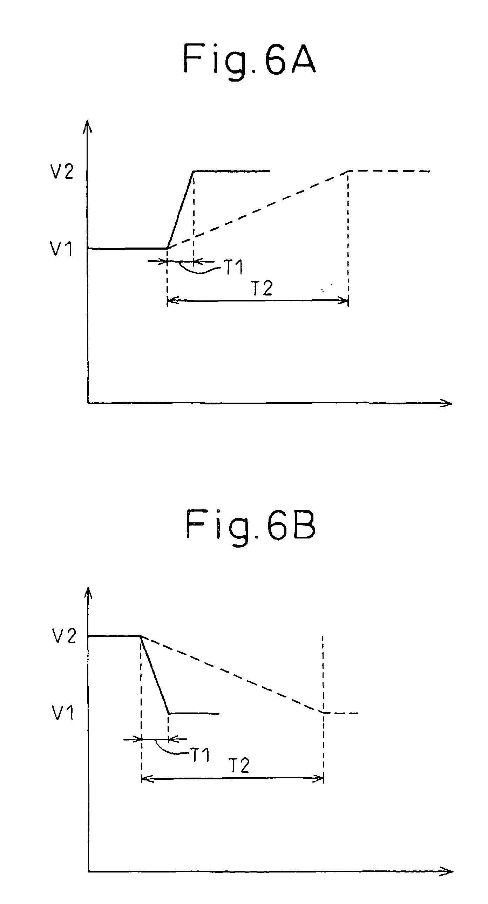

Fig. 6A and Fig. 6B are graphs for explaining the relationship between a voltage variation $|V_2-V_1|$ and a time interval T established when the link voltage is elevated (Fig. 6A) or lowered (Fig. 6B).

A change $\Delta Q$ in charge stored in the capacitor and a change $\Delta V$ in the voltage at the capacitor have the following relationship:

$$\Delta Q = C\Delta V$$

where C denotes an electrostatic capacitance of the capacitor. Supposing an input current I is held constant, the following relationship is established:

$$\Delta Q = IT$$

Consequently, the following formula is true:

$$I = C \times \Delta V/T$$

Therefore, the input current I is determined by the voltage variation $\Delta V$ ($|V_2-V_1|$) and the time interval T. If the voltage variation $\Delta V$ and time interval T are determined appropriately, the input current I can be confined to the rated current.

Moreover, either of the voltage variation $\Delta V$ and the time interval T, for example, the voltage variation $\Delta V$ ($|V_2-V_1|$) may be held constant as shown in Fig. 6A and Fig. 6B, and the time interval T may be specified as a parameter according to a permissible current. Referring to Fig. 6A and Fig. 6B, a time interval T1 is specified for a relatively large permissible current, and a time interval T2 is specified for a relatively small permissible current.

A converter in accordance with the present invention and an inverter including the converter can be adapted to a motor in which supply and recovery of power is carried out. Moreover, the converter and inverter can be adapted to a motor in which recovery of energy is not carried out but only consumption of energy is carried out.

## Claims

**1.** A converter comprising:

a converter circuit converting an alternating current into a direct current; and

a control circuit controlling the converter circuit, said control circuit controlling a voltage of the direct current toward a higher voltage in response to an externally-issued dc voltage elevating command and/or controlling the voltage toward a lower voltage in response to an externally-issued dc voltage lowering command.

**2.** The converter according to claim 1, wherein the dc voltage elevating command is externally issued when a load connected to the converter circuit via an inverter circuit that inverts a direct current into an alternating current is to be increased, and the dc voltage lowering command is externally issued when the load is to be decreased.

**3.** The converter according to claim 2, wherein the load includes a motor, the increase in the load includes acceleration of the motor and the decrease in the load includes deceleration of the motor.

**4.** The converter according to claim 3, wherein the dc voltage elevating command is externally issued prior to a motor acceleration command, and the dc voltage lowering command is externally issued prior to a motor deceleration command.

**5.** The converter according to claim 1, wherein at least one of a voltage difference by which the dc voltage is controlled to rise and a length of a rising period is externally designated.

**6.** The converter according to claim 1, wherein at least one of a voltage difference by which the dc voltage is controlled to fall and a length of a falling period is externally designated.

**7.** An inverter comprising:

a converter circuit converting an alternating current into a direct current;
an inverter circuit, connected to the converter circuit, inverting a direct current fed from the converter circuit into an alternating current; and
a control circuit controlling the converter circuit and inverter circuit, said control circuit controlling a voltage of the direct current toward a higher voltage in response to an externally-issued dc voltage elevating command and/or controlling the voltage toward a lower voltage in response to an externally-issued dc voltage lowering command.

**8.** The inverter according to claim 7, wherein the dc voltage elevating command is externally issued when a load connected to the inverter circuit is to be increased, and the dc voltage lowering command is externally issued when the load is to be decreased.

9. The inverter according to claim 8, wherein the load includes a motor, the increase in the load includes acceleration of the motor, and the decrease in the load includes deceleration of the motor.

10. The inverter according to claim 9, wherein the dc voltage elevating command is externally issued prior to a motor acceleration command, and the dc voltage lowering command is externally issued prior to a motor deceleration command.

11. The inverter according to claim 7, wherein at least one of a voltage difference by which the dc voltage is controlled to rise and a length of a rising period is externally designated.

12. The inverter according to claim 7, wherein at least one of a voltage difference by which the dc voltage is controlled to fall and a time interval length of a falling period is externally designated.

# Fig.1

EP 1 555 744 A2

# Fig.2

POWER
SOURCE

13

c

TO
INVERTER
CIRCUIT

12

CONTROL
CIRCUIT — 15

NC PROGRAM

# Fig.3

DC LINK VOLTAGE

TIME

A

c

a

b

d

e

ΔV

# Fig.4

# Fig.5

# Fig.6A

# Fig.6B